# EUROPEAN PATENT APPLICATION

(11) **EP 4 329 028 A1**
(43) Date of publication of application: **28.02.2024**
(21) Application number: 23189151.6
(22) Date of filing: 02.08.2023
(51) Int. Cl.: H01M 10/04, H01M 10/0525, H01M 50/417, H01M 50/449, H01M 50/46, H01M 50/466, H01M 50/451, H01M 50/457

(54) **METHOD FOR MANUFACTURING SECONDARY BATTERY AND SECONDARY BATTERY**

(30) Priority: 26.08.2022 JP 2022135186
(71) Applicant: Prime Planet Energy & Solutions, Inc., Chuo-ku Tokyo 103-0022 (JP)
(72) Inventor: MAEDA, Tomonori, Tokyo, 103-0022 (JP)
(74) Representative: Kuhnen & Wacker Patent- und Rechtsanwaltsbüro PartG mbB

(57) **Abstract**

A method for manufacturing a secondary battery herein disclosed includes: an assembly preparing step of accommodating an electrode body and an electrolyte into a battery case, and preparing a battery assembly; and a high temperature treatment step of restraining the battery assembly under a restraining pressure of at least 0.35 MPa or more, and retaining the battery assembly so that the temperature of the battery assembly may become at least 80°C or more. Herein, the high temperature treatment step is carried out so as to satisfy a formula (1): A ≥ B > C; where A (N/m) represents a peel strength at an interface between a separator and a negative electrode active material layer, B (N/m) represents a peel strength at an interface between the negative electrode active material layer and a negative electrode current collector, and C (N/m) represents a peel strength in the negative electrode active material layer.

## Description

### BACKGROUND OF THE DISCLOSURE

### 1. Field

The present disclosure relates to a method for manufacturing a secondary battery and a secondary battery.

### 2. Background

A secondary battery such as a lithium ion secondary battery has been preferably used for a portable power supply of a personal computer, a portable terminal, or the like, and a vehicle driving power supply for an electric vehicle (BEV), hybrid vehicle (HEV), a plug-in hybrid vehicle (PHEV), or the like. Such a secondary battery includes, for example, an electrode body having a positive electrode, a negative electrode, and a separator, an electrolyte, and a battery case for accommodating the electrode body and the electrolyte in the inside thereof. As a method for manufacturing such a secondary battery, for example, Japanese Patent Application Publication No. 2022-23488 discloses as follows: a positive electrode, a negative electrode, and a separator are stacked; and the stacked positive electrode, negative electrode, and separator are pressed with heating. It is described that as a result of this, the adhesion strength between the electrode and the separator is improved.

### SUMMARY

However, according to a study by the present inventors, it has been found as follows: even in the case where the positive electrode, the negative electrode, and the separator are pressed and bonded with heating, when an electrolyte (e.g., a nonaqueous electrolyte) is injected subsequently, the adhesive strength may be reduced. When the adhesive strength is reduced, the distance between the electrodes increases locally, which may cause the irregularity of the charging and discharging reaction. On the other hand, when the press pressure is strengthened for enhancing the adhesive strength between the electrode and the separator, the air permeability of the separator is increased, and hence transfer of ions is hindered, which may reduce the high rate characteristics, and the like. For this reason, from the viewpoint of such battery performances, there is still room for an improvement.

The present disclosure was completed in view of the foregoing circumstances. It is a main object thereof to provide a method for manufacturing a secondary battery having favorable battery performances, and having a sufficient adhesive strength between the electrode and the separator. Further, it is another object thereof to provide a secondary battery having the foregoing characteristics.

A method for manufacturing a secondary battery herein disclosed includes: an assembly preparing step of accommodating an electrode body having a positive electrode including a positive electrode active material layer on positive electrode current collector, a negative electrode including a negative electrode active material layer on negative electrode current collector, and a separator including an adhesion layer, and an electrolyte into a battery case, and preparing a battery assembly; and a high temperature treatment step of restraining the battery assembly under a restraining pressure of at least 0.35 MPa or more, and retaining the battery assembly so as to be at least 80°C or more. The high temperature treatment step of the manufacturing method is carried out so as to satisfy a formula (1): A ≥ B > C; where A (N/m) represents a peel strength at an interface between the separator and the negative electrode active material layer, B (N/m) represents a peel strength at an interface between the negative electrode active material layer and the negative electrode current collector, and C (N/m) represents a peel strength in the negative electrode active material layer.

By carrying out a high temperature treatment step under the conditions as described above on the battery assembly including an electrode body and an electrolyte, the battery assembly is bound with the adhesive included in the adhesion layer of the separator swollen. As a result of this, for example, a preferable anchor effect is exhibited between the electrode and the separator. For this reason, even when restraining is carried out under a relatively lower pressure at the high temperature treatment step, the adhesive strength between the electrode and the separator can be improved. Further, restraining is carried out under a relatively lower pressure. For this reason, the air permeability of the separator will not be increased extremely. Therefore, transfer of ions can be kept in a favorable state. With such a configuration, it is possible to manufacture a secondary battery having favorable battery performances (e.g., high rate characteristics and input / output characteristic), and having high adhesion between the electrode and the separator.

### BRIEF DESCRIPTION OF THE DRAWINGS

FIG. 1 is a perspective view of a secondary battery in accordance with one embodiment; and
FIG. 2 is a partial cross sectional view schematically showing a secondary battery in accordance with one embodiment.

### DETAILED DESCRIPTION

Below, embodiments of the technology herein disclosed will be described by reference to the accompanying drawings. Incidentally, matters necessary for executing the technology herein disclosed, except for matters specifically referred to in the present specification (e.g., the general configuration and manufacturing process of a battery not characterizing the technology herein disclosed) can be grasped as design matters of those skilled in the art based on the related art in the present field. The technology herein disclosed can be executed based on the contents disclosed in the present specification and the technical common sense in the present field. Further, below, the members or portions producing the same action are given the same reference numerals and signs, and an overlapping description can be omitted or simplified. Incidentally, the expression of "A to B (herein, A and B are each a given numerical value)" indicative of the range in the present specification is assumed to include the meaning of "more than A and less than B", "more than A and B or less", and "A or more and less than B" together with the meaning of "A or more and B or less".

In the present specification, the term "battery" is a term denoting an electric storage device capable of extracting an electric energy in general, and is a concept including a primary battery and a secondary battery. Further, in the present specification, the term "secondary battery" is a term denoting an electric storage device capable of repeatedly charging and discharging by transfer of electric charge carriers between the positive electrode and the negative electrode via an electrolyte in general, and is a concept including a so-called storage battery (chemical battery) such as a lithium ion secondary battery or a nickel hydrogen battery, and a capacitor (physical battery) such as an electric double layer capacitor.

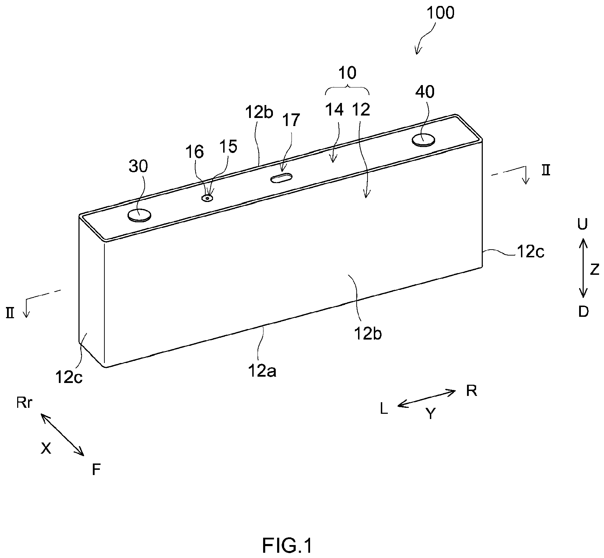

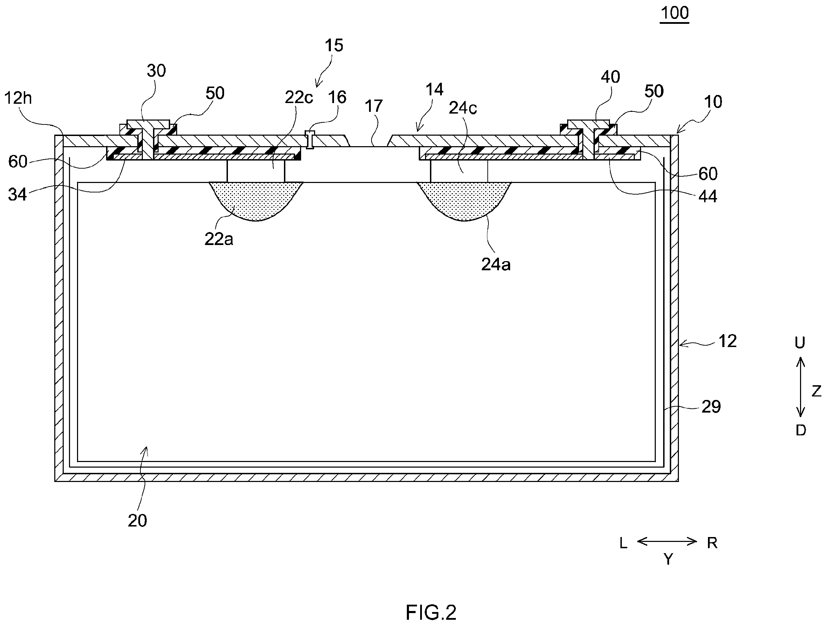

Herein, first, the configuration of a secondary battery 100 herein disclosed will be described. Then, respective steps of the manufacturing method herein disclosed will be described. FIG. 1 is a perspective view of the secondary battery 100 herein disclosed. Further, FIG. 2 is a schematic longitudinal cross sectional view along line II-II of FIG. 1. Incidentally, in the following description, reference signs L, R, F, Rr, U, and D in the drawing represent the left, the right, the front, the rear, the up, and the down, respectively. Further, a reference sign X in the drawing indicates the "short side direction of the battery"; a reference sign Y indicates the "long side direction of the battery"; and a reference sign Z represents the "vertical direction of the battery". However, these are merely the directions for convenience of description, and are not intended to limit the setting aspect of the secondary battery 100 at all.

As shown in FIGS. 1 and 2, the secondary battery 100 includes a battery case 10, an electrode body 20, a positive electrode terminal 30, a negative electrode terminal 40, and an electrolyte not shown. Below, the specific configuration of the secondary battery 100 will be described.

The battery case 10 is a housing for accommodating the electrode body 20 and an electrolyte. The battery case 10 has a bottomed rectangular parallelepiped-shaped (rectangular) outward shape. The material for the battery case 10 may be the same as that conventionally used, and has no particular restriction. The battery case 10 is preferably made of a metal, and more preferably includes, for example, aluminum, an aluminum alloy, iron, or an iron alloy. As shown in FIG. 2, the battery case 10 includes an exterior body 12 having an opening 12h and a sealing sheet (lid body)14 for blocking the opening 12h.

The exterior body 12 includes a bottom wall 12a, a pair of wide surfaces 12b extending from the bottom wall 12a and opposed to each other, and a pair of narrow surfaces 12c extending from the bottom wall 12a and opposed to each other as shown in FIG. 1. The bottom wall 12a is substantially in a rectangular shape. The bottom wall 12a is opposed to the opening 12h (see FIG. 2). The sealing sheet 14 is attached to the exterior body 12 so as to block the opening 12h of the exterior body 12. The sealing sheet 14 is opposed to the bottom wall 12a of the exterior body 12. The sealing sheet 14 is substantially in a rectangular shape in a plan view. The battery case 10 is integrated by joining (e.g., welding joining) of the sealing sheet 14 to the periphery of the opening 12h of the exterior body 12.

As shown in FIG. 2, the sealing sheet 14 is provided with an injection hole 15 and a gas discharge valve 17. The injection hole 15 is a through hole for injecting an electrolyte into the inside of the battery case 10 after assembling the sealing sheet 14 to the exterior body 12. The injection hole 15 is sealed by a sealing member 16 after injection of the electrolyte. The gas discharge valve 17 is a thin-walled part configured so as to rupture when the pressure in the battery case 10 becomes equal to, or larger than a prescribed value, and to discharge the gas in the battery case 10 to the outside.

The electrolyte is accommodated in the inside of the battery case 10 together with the electrode body 20. As the electrolytes, those used for a conventionally known battery can be used without particular restriction. As one example thereof, a nonaqueous electrolyte obtained by dissolving a support salt in a nonaqueous type solvent can be used. As the nonaqueous type solvents, for example, carbonate type solvents such as ethylene carbonate (EC), dimethyl carbonate (DMC), and ethyl methyl carbonate (EMC) can be used. As the support salt, a fluorine-containing lithium salt such as LiPF₆ can be used. The concentration of the support salt has no particular restriction, and can be, for example, 0.1 mol/L to 1.2 mol/L. Incidentally, the form of the electrolyte is not limited to a liquid form, and may be a gel form, or may be a solid form.

The electrode body 20 is the power generating element of the secondary battery 100, and includes a positive electrode in which a positive electrode active material layer 22a is fixed on positive electrode current collector 22c, a negative electrode in which a negative electrode active material layer 24a is fixed on negative electrode current collector 24c, and a separator having an adhesion layer. The electrode body 20 is accommodated in the inside of the exterior body 12 while being covered with an insulation film such as an electrode body holder 29 as shown in FIG. 2. The electrode body 20 is herein a winding-shaped lamination type electrode body configured by inserting a plurality of positive electrodes and a plurality of negative electrodes into the separator folded in a winding shape. However, the electrode body may be a wound electrode body in which band-shaped positive electrodes and band-shaped negative electrodes are stacked while being insulated from each other via two band-shaped separators, and wound in the long side direction with the winding axis as the center. Alternatively, the electrode body may be a lamination type electrode body in which rectangular-shaped positive electrodes and rectangular-shaped negative electrodes are alternately stacked via rectangular-shaped separators.

As shown in FIG. 2, at the upper end in the vertical direction Z of the electrode body 20, there is a positive electrode current collector exposed part at which the positive electrode active material layer 22a is not fixed, and a part of the positive electrode current collector 22c is exposed. At the positive electrode current collector exposed part, a positive electrode collector member 34 is attached. The positive electrode collector member 34 can include the same metal material as that of the positive electrode current collector 22c, for example, a conductive metal such as aluminum or an aluminum alloy. Further, at the upper end in the vertical direction Z of the electrode body 20, there is a negative electrode current collector exposed part at which the negative electrode active material layer 24a is not fixed, and a part of the negative electrode current collector 24c is exposed. At the negative electrode current collector exposed part, a negative electrode collector member 44 is attached. The negative electrode collector member 44 can include the same metal material as that of the negative electrode current collector 24c, for example, a conductive metal such as copper or a copper alloy.

The positive electrode terminal 30 is attached to one end (the left end in FIG. 2) in the long side direction Y of the sealing sheet 14. The positive electrode terminal 30 is electrically connected with the electrode body 20 via the positive electrode collector member 34 in the inside of the battery case 10. The negative electrode terminal 40 is attached to the other end (the right end in FIG. 2) in the long side direction Y of the sealing sheet 14. The negative electrode terminal 40 is electrically connected with the electrode body 20 via the negative electrode collector member 44 in the inside of the battery case 10. The positive electrode terminal 30 is preferably formed of a metal excellent in conductivity, for example, aluminum or an aluminum alloy. Further, the negative electrode terminal 40 is preferably formed of a metal excellent in conductivity, for example, copper or a copper alloy. The positive electrode terminal 30 and the negative electrode terminal 40 are each insulated from the sealing sheet 14 by a gasket 50 and an insulator 60. The gasket 50 and the insulator 60 can include a resin material having electric insulation, for example, a fluorinated resin such as a perfluoroalkoxy fluorine resin (PFA), or a polytetrafluoroethylene (PTFE), a polyphenylene sulfide resin (PPS), or polypropylene (PP).

The positive electrode has the band-shaped positive electrode current collector 22c and the positive electrode active material layer 22a fixed on at least one surface of the positive electrode current collector 22c. For respective members forming the positive electrode, conventionally known materials usable for a general battery (e.g., a lithium ion secondary battery) can be used without particular restriction. For example, the positive electrode current collector 22c preferably includes, for example, a conductive metal such as aluminum, an aluminum alloy, nickel, or a stainless steel. The positive electrode active material layer 22a includes a positive electrode active material (e.g., a lithium transition metal composite oxide such as a lithium nickel cobalt manganese composite oxide) capable of reversibly occluding and releasing an electric charge carrier. Incidentally, the positive electrode active material layer 22a may include given components except for a positive electrode active material, for example, a conductive material, a binder, and various additive components. As the conductive material, for example, a carbon material such as acetylene black (AB) can be used. As the binder, for example, polyvinylidene fluoride (PVdF) can be used.

The negative electrode has the band-shaped negative electrode current collector 24c and the negative electrode active material layer 24a fixed on at least one surface of the negative electrode current collector 24c. For respective members forming the negative electrode, conventionally known materials usable for a general battery (e.g., a lithium ion secondary battery) can be used without particular restriction. For example, the negative electrode current collector 24c preferably includes a conductive metal such as copper, a copper alloy, nickel, or a stainless steel. The negative electrode active material layer 24a includes a negative electrode active material (e.g., a carbon material such as graphite) capable of reversibly occluding and releasing an electric charge carrier. Incidentally, the negative electrode active material layer 24a may include given components except for a negative electrode active material, for example, a conductive material, a binder, a dispersant, a thickener, and various additive components. As the binders, for example, rubbers such as styrene butadiene rubber (SBR) can be used. As the dispersants, for example, celluloses such as carboxymethyl cellulose (CMC) can be used.

The positive electrode and the negative electrode are arranged opposed to each other while being insulated from each other via a separator. The separator is an insulation sheet including a plurality of fine through holes capable of allowing electric charge carriers to pass therethrough formed therein. The separator includes a base material and an adhesion layer. The separator may further include a heat resistant layer in addition to the base material and the adhesion layer. For example, the separator has a base material and a heat resistant layer provided at one surface in the thickness direction of the base material, and further has an adhesion layer at at least one surface, preferably each opposite surface thereof.

The base material of the separator has no particular restriction, and preferably includes a porous base material including at least one kind selected from, for example, polyolefine, polyvinylidene fluoride, polytetrafluoroethylene, polyimide, polyamide, polyamideimide, polyether sulfone, polyether imide, and aramid as the main component. Such a base material preferably includes polyolefine, and particularly preferably includes polyethylene (PE), and polypropylene (PP).

The adhesion layer of the separator is bonded with the electrodes (the positive electrode and/or the negative electrode) by, for example, heating or pressurization (typically, press molding). The adhesion layer includes an adhesive. As the adhesives, mention may be made of acrylic type resins, fluorine type resins, epoxy type resins, urethane resins, ethylene vinyl acetate resin, and the like. Out of these, fluorine type resins and acrylic type resins are preferable because they have high flexibility, and can more preferably exhibit the adhesion. Examples of the fluorine type resin may include polyvinylidene fluoride (PVdF) and polytetrafluoroethylene (PTFE). Examples of acrylic type resin may include polyacrylic acid (PAA), and polymethyl methacrylate (PMMA).

The adhesion layer of the separator is formed by applying an adhesive onto the surface of the base material of the separator or the heat resistant layer with an existing method such as vacuum evaporation. The adhesion layer may be applied all over, or may be applied in a prescribed pattern. The adhesion layer may have a dot shape, a stripe shape, a wavy shape, a band shape (stripe shape), a broken line shape, or a shape of combination thereof in a plan view. The adhesion layer is formed in the following manner. For example, after providing a heat resistant layer on one entire surface in the thickness direction of the separator, a dot-shaped adhesive (dot-shaped portion) is arranged on one entire surface of the separator on which the heat resistant layer is provided, and the other entire surface of the separator on which the heat resistant layer is not provided. At this step, it is essential only that the area density of the dot-shaped adhesive is adjusted so as to be substantially constant. Further, it is essential only that the amounts of respective dot-shaped adhesives are substantially the same in a plurality of dot-shaped adhesives. It is essential only that the number density of the dot-shaped adhesive is substantially constant at one entire surface and the other entire surface of the separator. The following configuration is also acceptable: the adhesive is arranged so that the area density may become substantially constant at at least one of one entire surface and the other entire surface of the separator, and an adhesion layer is provided on at least one surface of the separator.

The heat resistant layer is provided for the purpose of protecting the separator, for example, when a heat is generated upon a short circuit between the positive electrode and the negative electrode, or other purposes. The heat resistant layer may be provided directly on the surface of the base material, or may be provided on the base material via another layer. However, the heat resistant layer is not essential, and may be omitted in other embodiments. The heat resistant layer preferably includes inorganic particles of an aluminum oxide or the like, and a heat resistant layer binder. As the heat resistant layer binders, mention may be made of acrylic type resins, fluorine type resins, epoxy type resins, urethane resin, ethylene vinyl acetate resin, and the like. The kind of the heat resistant layer binder may be the same as, or may be different from that of the adhesive of the adhesion layer of the separator.

The separator is arranged between the positive electrode and the negative electrode (more particularly, between the positive electrode active material layer 22a and the negative electrode active material layer 24a) as described above. The separator is configured porous so that the electric charge carriers included in the electrolyte can pass therethrough. The separator retains an electrolyte (e.g., a nonaqueous electrolyte) in the hole, and forms an ion conduction path between the positive electrode active material layer 22a and the negative electrode active material layer 24a. Herein, the air permeability (Gurley value, the value measured according to JIS P8117: 2009; the same shall apply hereinafter) of the separator is preferably, for example, 200 sec/100 ml or less, and more preferably 180 sec/100 ml or less. As a result of this, transfer of electric charge carriers in the separator becomes smooth. For example, even in such an aspect that the secondary battery 100 repeats high-rate charging and discharging, the increase in internal resistance can be preferably suppressed. The lower limit value of the air permeability has no particular restriction, and may only be, for example, about 30 sec/100 ml or more.

The secondary battery 100 herein disclosed satisfies formula (1): A ≥ B > C where A (N/m) represents the peel strength at the interface between the separator and the negative electrode active material layer 24a, B (N/m) represents the peel strength at the interface between the negative electrode active material layer 24a and the negative electrode current collector 24c, and C (N/m) represents the peel strength in the negative electrode active material layer 24a. Herein, in the present specification, the "peel strength (N/m)" denotes the 90° peel strength measured according to JIS K6854-1: 1999 (ISO 8519-1: 1990). The peel strength A at the interface between the separator and the negative electrode active material layer 24a is equal to the peel strength B at the interface between the negative electrode active material layer 24a and the negative electrode current collector 24c, or larger than the peel strength B, and the peel strength A is larger than the peel strength C in the negative electrode active material layer 24a. This prevents peeling between the separator and the negative electrode active material layer 24a. As a result of this, for the secondary battery 100, the adhesion between the negative electrode and the separator is preferably improved.

Further, for the secondary battery 100 herein disclosed, the peel strength A at the interface between the separator and the negative electrode active material layer 24a is 10 N/m or more. Having such a peel strength preferably implements the adhesion between the negative electrode and the separator. For example, even after the secondary battery 100 repeats high rate charging and discharging, the adhesion between the negative electrode and the separator is ensured. The upper limit of the peel strength has no particular restriction, and is preferably, for example, 20 N/m or less, and more preferably 18 N/m or less.

### Method for Manufacturing Secondary Battery

Then, a method for manufacturing the secondary battery 100 herein disclosed will be described. The manufacturing method herein disclosed includes an assembly preparing step of accommodating an electrode body 20 having a positive electrode, a negative electrode, and a separator, and an electrolyte in the battery case 10, and preparing a battery assembly; and a high temperature treatment step of restraining the battery assembly under a restraining pressure of at least 0.35 MPa or more, and retaining the battery assembly so that the temperature of the battery assembly may become at least 80°C or more. Herein, the manufacturing method is characterized in that the high temperature treatment step is carried out so as to satisfy the formula (1): A ≥ B > C where A (N/m) represents the peel strength at the interface between the separator and the negative electrode active material layer 24a, B (N/m) represents the peel strength at the interface between the negative electrode active material layer 24a and the negative electrode current collector 24c, and C (N/m) represents the peel strength in the negative electrode active material layer 24a. In accordance with the manufacturing method herein disclosed, it is possible to manufacture the secondary battery 100 improved in adhesion between the electrode and the separator while having favorable battery characteristics (e.g., the high rate characteristics and the input / output characteristic).

Incidentally, the manufacturing method herein disclosed is characterized by the high temperature treatment step as described above. Other manufacturing processes may be the same as conventional processes. Further, the manufacturing method may include still other steps at a given stage.

At the assembly preparing step, a battery assembly is prepared. Incidentally, in the present specification, the term "battery assembly" denotes a secondary battery before carrying out initial charging and aging. The battery assembly prepared at the present step includes the battery case 10, the electrode body 20, and an electrolyte.

The electrode body 20 includes a positive electrode, a negative electrode, and a separator. The positive electrode can be manufactured in the following manner. For example, a positive electrode slurry obtained by kneading the foregoing positive electrode active material, a conductive material, and a binder in an appropriate solvent is applied on the surface of the positive electrode current collector 22c, and is dried. Further, the negative electrode can be manufactured in the following manner. For example, a negative electrode slurry obtained by kneading the foregoing negative electrode active material, a binder, and a thickener in an appropriate solvent is applied on the surface of the negative electrode current collector 24c, and is dried. As the separator, the one including at least the base material and the adhesion layer as described above is prepared. The electrode body 20 can be manufactured by inserting a plurality of positive electrodes and a plurality of negative electrodes into the separator folded in a winding shape and stacking them.

As shown in FIG. 2, at the upper end in the vertical direction Z of the electrode body 20, the positive electrode collector member 34 is welded to the positive electrode current collector 22c. The positive electrode terminal 30 is electrically connected with the electrode body 20 via the positive electrode collector member 34. Further, at the upper end in the vertical direction Z of the electrode body 20, the negative electrode collector member 44 is welded to the negative electrode current collector 24c. The negative electrode terminal 40 is electrically connected with the electrode body 20 via the negative electrode collector member 44. As a result of this, the sealing sheet 14, the electrode body 20, the positive electrode terminal 30, and the negative electrode terminal 40 are integrated.

Then, the electrode body 20 integrated with the sealing sheet 14 is inserted through the opening 12h of the exterior body 12. Then, the sealing sheet 14 and the periphery of the opening 12h of the exterior body 12 are joined by laser welding or the like. Subsequently, an electrolyte is injected from the injection hole 15, and the injection hole 15 is blocked by the sealing member 16, thereby hermetically sealing the battery assembly. In the manner described up to this point, the battery assembly can be prepared.

At the high temperature treatment step, the battery assembly including the electrode body 20 and the electrolyte is retained under a prescribed restraining pressure, and a prescribed temperature condition. Specifically, the battery assembly prepared at the assembly preparing step is bound under a pressure of at least 0.35 MPa or more, and is retained under high temperature environment so that the temperature of the battery assembly may become 80°C or more. Then, the high temperature treatment step is carried out so as to satisfy the formula (1): A ≥ B > C where A (N/m) represents the peel strength at the interface between the separator and the negative electrode active material layer 24a, B (N/m) represents the peel strength at the interface between the negative electrode active material layer 24a and the negative electrode current collector 24c, and C (N/m) represents the peel strength in the negative electrode active material layer 24a. As a result of this, also for the completed secondary battery 100, the electrode and the separator can be preferably bonded with each other.

With a conventional manufacturing method, after constructing an electrode body, pressing is carried out with heating, thereby bonding the electrode (the positive electrode and/or the negative electrode) and the separator. However, as a result of a study by the present inventors, it has been found as follows: when an electrolyte (e.g., a nonaqueous electrolyte) is injected after bonding the electrodes and the separator, the adhesive strength between the electrodes and the separator is reduced (i.e., the peel strength is reduced) in the completed battery. For this reason, with the manufacturing method herein disclosed, after injecting a nonaqueous electrolyte, the electrodes and the separator are bonded with each other under prescribed restraining pressure and temperature. As a result of this, the battery assembly can be pressed with the adhesive included in the adhesion layer of the separator absorbing the nonaqueous electrolyte and being swollen. For this reason, presumably, even under a relatively lower restraining pressure, the adhesive is deformed between the electrode and the adhesion layer of the separator, so that the adhesive strength due to the anchor effect is preferably exhibited. Further, by adjusting the peel strength among the separator, the negative electrode active material layer 24a, and the negative electrode current collector 24c so as to satisfy the formula (1), the adhesive strength between the electrode and the separator is also sufficiently ensured in the completed secondary battery 100. Further, with such a manufacturing method, a relatively lower restraining pressure enables bonding between the electrode and the separator. As a result, the air permeability of the separator will not be increased excessively. As a result of this, the state in which ions can preferably transfer is kept, so that it is possible to manufacture the secondary battery 100 having favorable high rate characteristics and input / output characteristic. Therefore, with the manufacturing method herein disclosed, it is possible to implement the secondary battery 100 improved in adhesion between the electrode and the separator while having favorable high rate characteristics and input / output characteristic.

The high temperature treatment step is carried out so that the peel strength A at the interface between the separator and the negative electrode active material layer 24a is equal to the peel strength B at the interface between the negative electrode active material layer 24a and the negative electrode current collector 24c, or larger than the peel strength B, and the peel strength A is larger than the peel strength C in the negative electrode active material layer 24a. As a result, the separator and the negative electrode active material layer 24a are prevented from being peeled from each other in the completed secondary battery 100. Therefore, also for the completed secondary battery 100, the negative electrode and the separator are preferably bonded with each other, so that, for example, the distance between electrodes can be suppressed from becoming uneven.

At the high temperature treatment step, as described above, the battery assembly is bound under a restraining pressure of at least 0.35 MPa or more. The restraining pressure can be appropriately adjusted according to, for example, the size of the battery assembly and the number of the stacked layers (or the number of wound layers) of the electrode body 20. The restraining pressure is, for example, preferably 0.35 MPa or more and 1.20 MPa or less, may be 0.35 MPa or more and 0.85 MPa or less, and is more preferably 0.35 MPa or more and 0.60 MPa or less. With the manufacturing method herein disclosed, also under a relatively lower restraining pressure, the electrode and the separator can be properly bonded with each other.

Further, at the high temperature treatment step, as described above, the battery assembly is retained so that the temperature of the battery assembly may become at least 80°C or more. The temperature at the high temperature treatment step may be retained so that the temperature of the battery assembly may become 85°C or more. On the other hand, when the temperature of the battery assembly becomes too high, an unintended side reaction is effected in the inside of the battery assembly, resulting in a concern about the deterioration of the battery characteristics, which is not preferable. For this reason, the temperature of the heat treatment is preferably retained so that the temperature of the battery assembly may become, for example, 100°C or less, and more preferably retained so that the temperature of the battery assembly may become 90°C or less.

At the high temperature treatment step, the time (retention time) during which the battery assembly is retained under the restraining pressure and the temperature as described above has no particular restriction, and the battery assembly is preferably retained for 6 hours or more. For example, the retention time is preferably about 6 hours to 100 hours, may be, for example, about 6 hours to 72 hours, may be about 12 hours to 48 hours, and may be about 12 hours to 24 hours. Although unconditional specification cannot be achieved because of a variation according to the size of the battery assembly, and the like, for example, preferably, the battery assembly is bound under a restraining pressure of 0.35 MPa to 0.60 MPa, and, is retained under temperature environment of 80°C to 90°C for about 6 hours to 24 hours.

Although the method for restraining the battery assembly has no particular restriction, desirably, a pair of restraining sheets are arranged in the direction of lamination of the electrode body, and the battery assembly is pressurized from both sides in the lamination direction for restraining. Herein, the wide surface 12b of the battery assembly is sandwiched by the pair of restraining sheets, and the pair of restraining sheets are connected by a bridging member. As a result, the battery assembly can be bound. At this step, when the area of one wide surface 12b of the battery assembly is assumed to be 100%, the restraining sheets are desirably arranged so as to be able to restrain at least 60% or more of the area. The restraining area is, for example, 60% or more, is preferably 80% or more, may be 90% or more, and may be 100% (i.e., the entire surface of the wide surface 12b of the battery assembly).

Although there is no particular restriction, the high temperature treatment step is preferably carried out with the battery assembly having an SOC (State of Charge) of less than 5%. The SOC of the battery assembly is preferably lower, may be, for example, less than 3%, may be less than 1%, and may be 0%. In other words, the high temperature treatment step is preferably carried out before carrying out initial charging on the battery assembly. As a result of this, it is possible to suppress deterioration of the battery characteristics due to the side reaction.

After the high temperature treatment step, initial charging and aging are carried out. As a result, it is possible to provide the secondary battery 100. The initial charging is the treatment of performing charging over the voltage region in which the manufactured (completed) secondary battery 100 is used. As a result of this, the battery assembly can be electrochemically activated. For the initial charging, a general procedure conventionally adopted in the method for manufacturing a secondary battery can be adopted. The conditions for initial charging have no particular restriction. For example, constant current constant voltage charging (CC-CV charging) in which under ordinary temperature environment (e.g., 25°C), charging is performed at a constant current of about 0.1 C to 10 C until the voltage between the terminals of the positive electrode terminal 30 and the negative electrode terminal 40 becomes 2.5 V to 4.2 V (preferably 3.0 V to 4.1 V), and charging is performed at a constant voltage until the SOC becomes 60% to 100% (e.g., 80% to 100%) is desirably assumed to be initial charging.

Further, aging is performed by retaining the battery assembly subjected to the initial charging in the temperature region of 35°C or more for 6 hours or more (preferably, 10 hours or more, for example, 20 hours or more). As a result of this, the stability of the SEI (Solid Electrolyte Interphase) film which can be generated on the surface of the negative electrode upon film initial charging can be enhanced, and the internal resistance can be reduced. The temperature of aging is desirably set at preferably about 45°C to 85°C (more preferably 50°C to 80°C, and further preferably 60°C to 70°C).

As described up to this point, in accordance with the manufacturing method herein disclosed, it is possible to provide the secondary battery 100 having favorable high rate characteristics and input / output characteristic, and high in adhesion between the electrode and the separator. The secondary battery 100 is usable for various uses, and can be preferably used as, for example, a power source (a driving power source) for a motor to be mounted on a vehicle such as a car or a truck. The kind of the vehicle has no particular restriction. Examples thereof may include a plug-in hybrid vehicle (PHEV; Plug-in Hybrid Electric Vehicle), a hybrid vehicle (HEV; Hybrid Electric Vehicle), and an electric vehicle (BEV; Battery Electric Vehicle). Further, the secondary battery 100 can be preferably used for construction of an assembled battery.

### Other Embodiments

Up to this point, the technology herein disclosed was described. The technology herein disclosed is not limited to the embodiments, and can be variously modified and changed.

For example, initial charging may be performed before the high temperature treatment step. The conditions for initial charging can be implemented by constant current constant voltage charging (CC-CV charging) under the conditions as described above. Then, after carrying out initial charging, the high temperature treatment step may be carried out while keeping the charging state. As a result of this, for example, reforming of the SEI film formed at the negative electrode can be performed at the same time. Therefore, the aging treatment as described above can be omitted, and hence the process is preferable from the viewpoint of the manufacturing efficiency.

As described up to this point, as specific aspects herein disclosed, mention may be made of those described in the following respective items.
Item 1: A method for manufacturing a secondary battery, includes: an assembly preparing step of accommodating an electrode body having a positive electrode including a positive electrode active material layer on positive electrode current collector, a negative electrode including a negative electrode active material layer on negative electrode current collector, and a separator including an adhesion layer, and an electrolyte in a battery case, and preparing a battery assembly; and a high temperature treatment step of restraining the battery assembly under a restraining pressure of at least 0.35 MPa or more, and retaining the battery assembly so that the temperature of the battery assembly may become at least 80°C or more. Herein, the high temperature treatment step is carried out so as to satisfy the formula (1): A ≥ B > C where A (N/m) represents the peel strength at the interface between the separator and the negative electrode active material layer, B (N/m) represents the peel strength at the interface between the negative electrode active material layer and the negative electrode current collector, and C (N/m) represents the peel strength in the negative electrode active material layer.
Item 2: The manufacturing method according to item 1, in which the high temperature treatment step includes restraining the battery assembly under a restraining pressure of at least 0.35 MPa or more, and retaining a state in which heating is performed so that the temperature of the battery assembly may become at least 80°C or more for 6 hours or more.
Item 3: The manufacturing method according to item 1 or 2, in which at the high temperature treatment step includes restraining at least 60% or more of an area of a wide surface, when the area of the wide surface of the battery assembly is 100%.Item 4: The manufacturing method according to any one of items 1 to 3, in which the high temperature treatment step is carried out with an SOC of the battery assembly of less than 5%.
Item 5: A secondary battery including: an electrode body having a positive electrode, a negative electrode, and a separator, an electrolyte, and a battery case for accommodating the electrode body and the electrolyte in the inside thereof, in which the positive electrode includes a positive electrode active material layer on positive electrode current collector, the negative electrode includes a negative electrode active material layer on negative electrode current collector, the separator includes an adhesion layer on the surface of the separator, and a formula (1): A ≥ B > C; and a formula (2) A ≥ 10 are satisfied where A (N/m) represents the peel strength at the interface between the separator and the negative electrode active material layer, B (N/m) represents the peel strength at the interface between the negative electrode active material layer and the negative electrode current collector, and C (N/m) represents the peel strength in the negative electrode active material layer.
Item 6: The secondary battery according to item 5, in which the peel strength A at the interface between the separator and the negative electrode active material layer is 10 N/m or more and 18 N/m or less.
Item 7: The secondary battery according to item 5 or 6, in which the adhesion layer includes an adhesive, and the adhesive is any of an acrylic resin type adhesive and a fluorine resin type adhesive.
Item 8: The secondary battery according to any one of items 5 to 7, in which the air permeability of the separator is 180 sec/100 ml or less.

Below, test examples regarding the present disclosure will be described. Incidentally, the contents of the test examples described below are not intended to limit the present disclosure.

A lithium nickel cobalt manganese type composite oxide (NCM) as the positive electrode active material, polyvinylidene fluoride (PVdF) as the binder, and acetylene black (AB) as the conductive material were prepared. These were weighed so that the mass ratios thereof may become NCM : PVdF: AB = 98 : 1 : 1, and mixed in N-methyl pyrrolidone (NMP), thereby preparing a positive electrode slurry. The positive electrode slurry was coated on the surface of aluminum foil as the positive electrode current collector. Thereafter, drying was performed, and pressing was performed to a prescribed thickness, thereby manufacturing a positive electrode.

A graphite powder (C) as the negative electrode active material, styrene butadiene rubber (SBR) as the binder, and carboxymethyl cellulose (CMC) as the thickener were prepared. These were weighed so that the mass ratios thereof may become C : SBR : CMC = 98 : 1 : 1, and were mixed in ion exchanged water, thereby preparing a negative electrode slurry. The negative electrode slurry was coated on the surface of copper foil as the negative electrode current collector. Thereafter, drying was performed, and pressing was performed to a prescribed thickness, thereby manufacturing a negative electrode.

As the separator, the one including an adhesion layer containing polyvinylidene fluoride (PVdF) on the surface (each opposite surface) of the porous base material made of polyethylene (PE) was prepared. The positive electrode and the negative electrode prepared as described above were inserted between the winding-shaped separator, thereby manufacturing a lamination type electrode body. The lamination type electrode body, a positive electrode terminal, a negative electrode terminal and a sealing sheet were connected, which was inserted into the exterior body of the battery case. Then, the sealing sheet and the exterior body were welded. Then, a nonaqueous electrolyte was injected through the injection hole of the sealing sheet. As the nonaqueous electrolyte, there was used the one obtained by dissolving LiPF₆ as a support salt in a mixed solvent including ethylene carbonate (EC), ethyl methyl carbonate (EMC), and dimethyl carbonate (DMC) at a volume ratio of EC : EMC : DMC = 30 : 40 : 30 in a concentration of 1.0 mol/L. In this manner, an evaluating battery assembly was prepared.

### Example 1

The evaluating battery assembly was accommodated in a thermostat set at 80°C with the wide surface thereof bound under a restraining pressure of 0.35 MPa, and was retained for 12 hours, thereby carrying out a high temperature treatment. Thereafter, initial charging and an aging treatment were carried out. As a result of this, an evaluating secondary battery of Example 1 was manufactured.

### Example 2

As the separator, there was prepared the one including an adhesion layer containing an acrylic type resin on the surface (each opposite surface) of the porous base material made of polyethylene (PE). An evaluating secondary battery of Example 2 was manufactured in the same manner as in Example 1, except for this.

### Examples 3 to 7

Evaluating secondary batteries of Examples 3 to 7 were manufactured in the same manner as in Example 1, except for changing the conditions of the restraining pressure and the temperature as shown in Table 1.

### Evaluation of Peel Strength

Each peel strength of the prepared evaluating secondary batteries was measured. The peel strength was measured according to 90-degree peel strength of adhesives testing method (JIS K6854-1: 1999). Specifically, the evaluating secondary battery subjected to a high temperature treatment was decomposed, and a lamination type electrode body was extracted. A specimen was cut out from the electrode body, and negative electrode current collector was fixed to a fixing jig by a double-sided tape. Then, the separator was stretched (at an angle of 90°) in the vertical direction by means of a peel strength meter (manufactured by A & D Co., Ltd.: model name Tensilon). Then, the peel strength upon peeling of the negative electrode active material layer from the negative electrode current collector or the separator was measured. The results are shown in Table 1.

Further, after carrying out a peel strength test, the surfaces of the negative electrode and the separator were observed. When the negative electrode active material layer was deposited on the separator side in contact with the negative electrode active material layer, it can be said that the peel strength A at the interface between the separator and the negative electrode active material layer is larger than the peel strength C in the negative electrode active material layer. Further, when the negative electrode active material layer is deposited on the separator side in contact with the negative electrode active material layer, it can be said that the peel strength A at the interface between the separator and the negative electrode active material layer is substantially the same as the peel strength B at the interface between the negative electrode current collector and the negative electrode active material layer, or larger than the peel strength B. On the other hand, when the negative electrode active material layer is not deposited on the separator side in contact with the negative electrode active material layer, it can be said that the peel strength A at the interface between the separator and the negative electrode active material layer is smaller than the peel strength C in the negative electrode active material layer. The results of linear arrangement of the peel strengths are shown in Table 1.

### Measurement of Air Permeability

The air permeability of the separator of each example was measured. Specifically, first, the separator of each example was cut out, and a specimen was prepared. The specimen was set at a Gurley tester (A type), and an air pressure was applied thereto according to JIS P8117: 2009. Then, the time (sec) required for 100 ml of air to pass through the specimen was measured. The results are shown in Table 1.

[Table 1]

**Table 1**

| | High temperature treatment | | Peel strength | | Air permeability (ml/sec) |
|---|---|---|---|---|---|
| | Temperature (°C) | Binding pressure (MPa) | Linear arrangement of peel strength | Peel strength (N/m) | |
| Example 1 | 80 | 0.35 | A2≥B>C | 10 | 180 |
| Example 2 | 80 | 0.35 | A2≥B>C | 10 | 180 |
| Example 3 | 60 | 0 | B>C>A | 0 | 180 |
| Example 4 | 60 | 0.13 | B>C>A | 3 | 180 |
| Example 5 | 60 | 0.35 | B>C>A | 5 | 180 |
| Example 6 | 70 | 0.35 | B>C>A | 7.5 | 180 |
| Example 7 | 80 | 0.13 | B>C>A | 8 | 180 |

As shown in Table 1, irrespective of the kind of the adhesive, the battery assembly is bound under a restraining pressure of at least 0.35 MPa or more, and the battery assembly was retained so that the temperature of the battery assembly may become at least at 80°C or more, and the high temperature treatment step is carried out so that the relationship among the peel strength A at the interface between the separator and the negative electrode active material layer, the peel strength B at the interface between the negative electrode active material layer and the negative electrode current collector, and the peel strength C in the negative electrode active material layer may satisfy the formula (1): A ≥ B > C. As a result, it is possible to manufacture a secondary battery having a sufficient adhesive strength between the electrode and the separator. Further, as shown in Table 1, it is indicated as follows: with such a manufacturing method, the air permeability of the separator is not increased extremely, and hence the state in which ions can preferably transfer is kept. Therefore, it is possible to manufacture a secondary battery having favorable battery characteristics.

Further, in Examples 1 and 2, the peel strengths upon peeling were 10 N/m, and the negative electrode active material layer was deposited on the separator side. For this reason, it is indicated that the peel strength A at the interface between the separator and the negative electrode active material layer is at least 10 N/m or more.

Up to this point, regarding the technology herein disclosed, the specific examples were described in details. However, these are merely examples, and are not intended to limit the appended claims. The technology herein disclosed includes various modifications and changes of the specific examples.

## Claims

1. A method for manufacturing a secondary battery (100), comprising:
an assembly preparing step of accommodating an electrode body (20) having a positive electrode including a positive electrode active material layer (22a) on positive electrode current collector (22c), a negative electrode including a negative electrode active material layer (24a) on negative electrode current collector (24c), and a separator including an adhesion layer, and an electrolyte into a battery case (10), and preparing a battery assembly; and
a high temperature treatment step of restraining the battery assembly under a restraining pressure of at least 0.35 MPa or more, and retaining the battery assembly so that the temperature of the battery assembly may become at least 80°C or more,
wherein the high temperature treatment step is carried out so as to satisfy
a formula (1): A ≥ B > C;
where A (N/m) represents a peel strength at an interface between the separator and the negative electrode active material layer (24a),
B (N/m) represents a peel strength at an interface between the negative electrode active material layer (24a) and the negative electrode current collector (24c), and
C (N/m) represents a peel strength in the negative electrode active material layer.

2. The manufacturing method according to claim 1,
wherein the high temperature treatment step includes restraining the battery assembly under a restraining pressure of at least 0.35 MPa or more, and retaining a state in which heating is performed so that the temperature of the battery assembly may become at least 80°C or more for at least 6 hours.

3. The manufacturing method according to claim 1 or 2,
wherein at the high temperature treatment step includes restraining at least 60% or more of an area of a wide surface (12b), when the area of the wide surface of the battery assembly is 100%.

4. The manufacturing method according to any one of claims 1 to 3,
wherein the high temperature treatment step is carried out with an SOC of the battery assembly of less than 5%.

5. A secondary battery (100) comprising an electrode body (20) including a positive electrode, a negative electrode, and a separator;
an electrolyte; and
a battery case (10) for accommodating the electrode body (20) and the electrolyte in an inside thereof,
wherein the positive electrode includes a positive electrode active material layer (22a) on positive electrode current collector (22c),
the negative electrode includes a negative electrode active material layer (24a) on negative electrode current collector (24c),
the separator includes an adhesion layer on a surface of the separator, and
a formula (1): A ≥ B > C; and
a formula (2): A ≥ 10; are satisfied,
where A (N/m) represents a peel strength at an interface between the separator and the negative electrode active material layer (24c),
B (N/m) represents a peel strength at an interface between the negative electrode active material layer (24a) and the negative electrode current collector (24c), and
C (N/m) represents a peel strength in the negative electrode active material layer.

6. The secondary battery (100) according to claim 5,
wherein the peel strength A at the interface between the separator and the negative electrode active material layer (24a) is 10 N/m or more and 18 N/m or less.

7. The secondary battery (100) according to claim 5 or 6,
wherein the adhesion layer includes an adhesive, and
the adhesive is any of an acrylic resin type adhesive and a fluorine resin type adhesive.

8. The secondary battery (100) according to any one of claims 5 to 7,
wherein an air permeability of the separator is 180 sec/100 ml or less.
